# EUROPÄISCHE PATENTSCHRIFT

(11) **EP 4 091 152 B1**
(45) Veröffentlichungstag und Bekanntmachung des Hinweises auf die Patenterteilung: **14.06.2023**
(21) Anmeldenummer: 20816913.6
(22) Anmeldetag: 25.11.2020
(51) Int. Cl.: G08G 1/0962, G08G 1/0967, G08G 1/16, B60Q 1/52, B60Q 1/24, B60Q 9/00

(54) **VERFAHREN ZUM BETRIEB EINES ASSISTENZSYSTEMS EINES KRAFTFAHRZEUGS**
METHOD FOR OPERATING AN ASSISTANCE SYSTEM OF A MOTOR VEHICLE
PROCÉDÉ POUR FAIRE FONCTIONNER UN SYSTÈME D'ASSISTANCE D'UN VÉHICULE AUTOMOBILE

(30) Priorität: 21.01.2020 DE 102020101280
(43) Veröffentlichungstag der Anmeldung: 23.11.2022
(73) Patentinhaber: Audi AG, 85045 Ingolstadt (DE)
(72) Erfinder: SCHMIDT, Valentin, 86633 Neuburg a.d. Donau (DE); ARMBRUSTER, Tilman, 85057 Ingolstadt (DE); RESCHKE, Johannes, 84085 Langquaid (DE); KRIJESTORAC, Faruk, 59379 Selm (DE)
(74) Vertreter: Lindner Blaumeier Patent- und Rechtsanwälte
(86) Internationale Anmeldenummer: PCT/EP2020/083276
(87) Internationale Veröffentlichungsnummer: WO 2021/148166

(56) Entgegenhaltungen:
- EP-A2- 2 610 837
- EP-B1- 2 610 837
- DE-A1-102015 213 481
- DE-A1-102017 223 439

## Beschreibung

Die Erfindung betrifft ein Verfahren zum Betrieb eines Assistenzsystems eines Kraftfahrzeugs sowie ein Assistenzsystem eines Kraftfahrzeugs als auch ein Kraftfahrzeug.

Bei einem manuellen Betrieb von Kraftfahrzeugen, wie Personenkraftwagen, ist es möglich, dass der Fahrer eine aktuelle Fahrsituation falsch einschätzt, und sich auf einer Fahrspur entgegen der Fahrtrichtung bewegt, für die die Fahrspur intendiert ist. In diesem Fall stellt das Kraftfahrzeug einen Falschfahrer dar. Vor allem in den Abend- und Nachtstunden, wenn eine visuelle Erfassung von Verkehrszeichen sowie Umgebungssituationen erschwert ist, ist die Wahrscheinlichkeit hierfür vergrößert. Auch bei einem automatisierten Betrieb des Kraftfahrzeugs ist es möglich, dass bei einer Fehlfunktion das Kraftfahrzeug entgegen der vorgesehenen Fahrtrichtung bewegt wird.

Falls sich auf der gleichen Fahrspur ein weiterer Verkehrsteilnehmer, wie ein weiteres Kraftfahrzeug, in der vorgesehenen Fahrtrichtung bewegt, besteht die Möglichkeit einer Kollision. Falls sich auf der gleichen Fahrspur ein weiterer Verkehrsteilnehmer entsprechend der Fortbewegungsrichtung bewegt wird, besteht die Möglichkeit einer Kollision. Hierbei ist der mögliche Schaden bei einer Kollision vergleichsweise groß, da beide Verkehrsteilnehmer, also die beiden Kraftfahrzeuge, jeweils mit einer Geschwindigkeit aufeinander zu bewegt werden. Daher ist es erforderlich, die beiden Verkehrsteilnehmer zu warnen. Hierfür wird üblicherweise eine Radiodurchsage oder dergleichen gewählt, bei dem mittels Funkwellen eine entsprechende Meldung an die Kraftfahrzeuge übersandt wird, beispielsweise im Rahmen einer Verkehrsdurchsage.

Somit erfolgt eine akustische Warnung des Fahrers des weiteren Kraftfahrzeugs, dass in dessen Umgebung ein Falschfahrer unterwegs ist. Auch wird meist eine entsprechende Warnung auf einem in einem Innenraum des weiteren Kraftfahrzeugs angeordneten Display ausgegeben. Ferner ist es auch bekannt, mittels Projektoren auf eine Vorder- oder Rückseite des weiteren Kraftfahrzeugs eine Warnung zu projizieren, sodass sämtliche sich im Bereich des weiteren Kraftfahrzeugs bewegende Verkehrsteilnehmer, die die Meldung betreffend den Falschfahrer nicht empfangen haben, ebenfalls visuell gewarnt werden.

Aus DE 10 2015 213 481 A1 ist ein Verfahren und System zum Warnen vor einem in falscher Richtung fahrenden Fahrzeug bekannt. Hierbei werden mittels eines fahrzeugexternen Servers Warninformationen bereitgestellt.

Aus DE 10 2017 223 439 A1 ist eine Warnvorrichtung vor Gefahrensituationen für ein Kraftfahrzeug bekannt. Die Warnvorrichtung weist eine Projektionseinrichtung auf.

In EP 2 610 837 A2 ist ein System zum Verteilen von Verkehrsinformationen offenbart. Mittels dessen soll eine Warnung von Verkehrsteilnehmern vor Falschfahrern erfolgen.

Der Erfindung liegt die Aufgabe zugrunde, ein besonders geeignetes Verfahren zum Betrieb eines Assistenzsystems eines Kraftfahrzeugs sowie ein besonders geeignetes Assistenzsystem eines Kraftfahrzeugs als auch ein besonders geeignetes Kraftfahrzeug anzugeben, wobei vorteilhafterweise eine Sicherheit erhöht ist.

Hinsichtlich des Verfahrens wird diese Aufgabe durch die Merkmale des Anspruchs 1, hinsichtlich des Assistenzsystems durch die Merkmale des Anspruchs 7 und hinsichtlich des Kraftfahrzeugs durch die Merkmale des Anspruchs 8 erfindungsgemäß gelöst. Vorteilhafte Weiterbildungen und Ausgestaltungen sind Gegenstand der jeweiligen Unteransprüche.

Das Verfahren dient dem Betrieb eines Assistenzsystems eines Kraftfahrzeugs. Das Kraftfahrzeug ist beispielsweise ein Nutzkraftwagen. Besonders bevorzugt ist das Kraftfahrzeug jedoch ein Personenkraftwagen (PKW). Das Kraftfahrzeug weist für den Vortrieb beispielsweise einen Verbrennungsmotor, einen Elektromotor oder eine Kombination hieraus auf. Das Kraftfahrzeug ist hierbei insbesondere vorgesehen und eingerichtet, auf einer Straße oder zumindest einem Straßenabschnitt bewegt zu werden. Mit anderen Worten ist das Kraftfahrzeug landgebunden.

Das Verfahren sieht vor, dass eine Meldung betreffend einen Falschfahrer empfangen wird. Mittels der Meldung wird hierbei eine Position des Falschfahrers übertragen, und dass dieser entgegen der Fahrtrichtung entlang eines bestimmten Straßenabschnitts bewegt wird. Die Position des Falschfahrers ist beispielsweise vergleichsweise genau oder weist mehrere einzelne Positionen/Punkte auf, an denen sich dieser befinden kann, also insbesondere eine Strecke entlang des Streckenabschnitts, wobei der Start und der Endpunkt des Streckenabschnitts angegeben sind.

Die Meldung wird dabei beispielsweise mittels Funkwellen von einer externen Stelle zu dem Kraftfahrzeug und folglich auch zu dem Assistenzsystem übertragen. Hierfür weist das Assistenzsystem beispielsweise einen geeigneten Funkempfänger auf oder ist signaltechnisch mit dem Funkempfänger, also der Einheit zum empfangen der Meldung, verbunden. Die Meldung ist beispielsweise eine Warnung vor dem Falschfahrer, also einem Verkehrsteilnehmer, der entlang einer Fahrspur entgegen der dafür vorgesehenen Fahrtrichtung bewegt wird. Die externe Stelle ist zum Beispiel eine behördliche Stelle oder ein Radiosender, und die Funkwellen werden beispielsweise ungerichtet ausgesandt. In einer weiteren Alternative erfolgt ein Senden der Meldung speziell zu dem Kraftfahrzeug. Mit anderen Worten ist die Meldung an das Kraftfahrzeug gerichtet. Hierfür wird insbesondere ein geeigneter Standard herangezogen, beispielsweise ein WLAN-Standard oder ein Mobilfunk-Standard, wie 3G, UMTS oder 5G. Insbesondere erfolgt die Übermittlung der Meldung zu dem Kraftfahrzeug mittels eines C2C- ("Car to Car)" oder eines C2X-Standards. In einer weiteren Alternative ist die externe Stelle ein Bestandteil einer Infrastruktur, und die Meldung wird von der Infrastruktur erstellt, mittels dessen beispielsweise der Falschfahrer erfasst wurde.

In einer weiteren Alternative wird die Meldung durch das Kraftfahrzeug selbst erstellt, insbesondere mittels eines weiteren Assistenzsystems. Mittels dessen wird insbesondere der Falschfahrer, also der Verkehrsteilnehmer, erfasst. Hierfür wird zweckmäßigerweise ein geeigneter Sensor herangezogen, beispielsweise ein Radarsensor oder eine Kamera. Alternativ hierzu erfolgt das Erfassen mittels Auswertens einer entsprechenden Botschaft, die zu dem Kraftfahrzeug übertragen wird, und die beispielsweise einem WLAN-, Mobilfunk-, C2C-oder C2X-Standards erfüllt. Anhand des erfassten Verkehrsteilnehmers und dessen ebenfalls erfassten Bewegungsrichtung wird mittels Vergleichs von in dem weiteren Assistenzsystem hinterlegten oder von diesem abgefragten Straßendaten und/oder Navigationsdaten überprüft, ob dieses in oder entgegen der jeweiligen Fahrtrichtung bewegt wird, für die der Straßenabschnitt vorgesehen ist. Insbesondere wird hierbei überprüft, ob das Bewegen entgegen der Fahrtrichtung für einen bestimmten Zeitraum erfolgte. Sofern dies der Fall ist, wird mittels des weiteren Assistenzsystems die Meldung betreffend den Falschfahrer ausgegeben, die von dem Assistenzsystem empfangen wird. Somit wird die Meldung betreffend den Falschfahrer durch das Kraftfahrzeug selbst erstellt.

In einem weiteren Arbeitsschritt wird die mit der Meldung übertragene Position des Falschfahrers mit einer aktuellen Position verglichen. Mit anderen Worten wird überprüft, ob die beiden Positionen eine bestimmte Bedingung erfüllen. Wenn dies der Fall ist, ist der Vergleich insbesondere positiv. Die aktuelle Position entspricht der Position, an der sich das Kraftfahrzeug aktuell befindet. Bei dem Vergleich wird somit überprüft, ob sich der Falschfahrer in der Umgebung des Kraftfahrzeugs befindet, und auch ob der Abstand geringer als ein bestimmter Grenzwert ist. Ferner wird zweckmäßigerweise überprüft, ob sich das Kraftfahrzeug und der Falschfahrer auf dem gleichen Straßenabschnitt/Streckenabschnitt befinden, also insbesondere auf der gleichen Straße. Dies entspricht somit einem Bestandteil der Bedingung. Auch wird insbesondere überprüft, ob sich der Falschfahrer in Fahrtrichtung des Kraftfahrzeugs vor diesem befindet, also ob eine Begegnung mit dem Falschfahrer erfolgen wird, zum Beispiel innerhalb eines Zeitabschnitts, der beispielsweise 10 Minuten, 5 Minuten oder 1 Minute beträgt. Zusammenfassend wird überprüft, ob der Falschfahrer eine Gefahr für das Kraftfahrzeug darstellt, da innerhalb des Zeitabschnitts eine Begegnung erfolgen wird.

In Abhängigkeit des Vergleichs wird für den Fahrer mittels des Projektors eine Empfehlung zur Anpassung eines Fahrparameters in einen vor dem Kraftfahrzeug liegenden Bereich projiziert. Mit anderen Worten erfolgt die Projektion, wenn die übertragene Position des Falschfahrers und die aktuelle Position geringer als der Grenzwert auseinander liegen und/oder das Kraftfahrzeug und der Falschfahrer sich auf dem gleichen Straßenabschnitt befinden und aufeinander zu bewegt werden. Mit anderen Worten erfolgt das Projizieren, wenn der Vergleich positiv ist und folglich der Falschfahrer eine Gefahr für das Kraftfahrzeug darstellt.

Der vor dem Kraftfahrzeug liegende Bereich stellt insbesondere einen Boden dar und folglich einen Teil der Straße/Straßenabschnitt, entlang dessen das Kraftfahrzeug bewegt wird. Insbesondere wird die Empfehlung auf die gleiche Fahrspur projiziert, auf der das Kraftfahrzeug bewegt wird. Mittels des Projektors wird somit eine Empfehlung zur Anpassung des Fahrparameters ausgegeben, sodass diese für den Fahrer des Kraftfahrzeugs ersichtlich ist, weswegen dieser den Fahrparameter entsprechend der Empfehlung abändern kann. Hierbei ist es für den Fahrer des Kraftfahrzeugs nicht erforderlich, den Blick von dem vor dem Kraftfahrzeug liegenden Bereich zu wenden, also dem Bereich, in dem der Falschfahrer auftauchen könnte. Somit ist eine Sicherheit erhöht. Da dem Fahrer die Empfehlung zur Anpassung des Fahrparameters visuell wiedergegeben wird, ist für diesen ersichtlich, wie der Fahrparameter angepasst werden soll. Somit ist auch in einem Angst- und/oder Panikzustand aufgrund des Falschfahrers der Fahrer nicht überfordert, wie eine Anpassung von seiner Fahrweise erfolgen soll.

Falls der Fahrer der Empfehlung zur Anpassung des Fahrparameters folgt, also den Fahrparameter entsprechend der Empfehlung anpasst, sind Folgen einer Kollision mit dem Falschfahrer sind und/oder die Wahrscheinlichkeit einer Kollision mit dem Falschfahrer verringert. Mit anderen Worten ist ein möglicher Schaden verringert und folglich auch eine Wahrscheinlichkeit einer Verletzung des Fahrers des Kraftfahrzeugs. Somit ist eine Sicherheit erhöht.

Beispielsweise wird die Empfehlung stets in den gleichen vor dem Kraftfahrzeug liegenden Bereich projiziert. Falls hierbei ein weiterer Verkehrsteilnehmer oder ein Gegenstand in diesem Bereich vorhanden ist, wird beispielsweise die Projektion unterlassen. Alternativ hierzu wird auf den Gegenstand die Empfehlung projiziert. Besonders bevorzugt wird der Bereich, in den die Empfehlung projiziert wird, angepasst, sodass stets im Wesentlichen auf eine ebene Fläche, also insbesondere auf die Straße, projiziert wird.

Beispielsweise ist der Abstand des Bereichs zu dem Kraftfahrzeug konstant. In einer Alternative hierzu ist der Abstand und/oder sonstige Parameter des Bereichs auf eine aktuelle Geschwindigkeit des Kraftfahrzeugs oder sonstige Umgebungsbedingungen und/oder einen Zustand des Kraftfahrzeugs angepasst.

Beispielsweise wird mittels des Projektors die Empfehlung so lange in den Bereich projiziert, bis der Fahrer das Assistenzsystem oder zumindest diese Funktion deaktiviert. In einer weiteren Alternative wird die Projektion beispielsweise beendet, wenn nach Empfang der Meldung ein bestimmter Zeitraum vergangen ist, beispielsweise 5 Minuten, 10 Minuten oder 20 Minuten. Alternativ oder in Kombination hierzu wird das Projizieren beendet, wenn das Kraftfahrzeug die übertragene Position des Falschfahrers erreicht hat oder diese passiert hat. Mit anderen Worten wird das Projizieren der Empfehlung beendet, wenn der Vergleich der übertragenen Position mit der nun aktuellen Position negativ ist. In einer weiteren Alternative wird beispielsweise die Meldung im Wesentlichen kontinuierlich empfangen, beispielsweise alle 30 Sekunden, alle 60 Sekunden oder alle 2 Minuten. Solange die Meldung kontinuierlich empfangen wird, wird die Empfehlung projiziert. Dann wenn das Empfangen der Meldung aufhört, wird auch das Projizieren der Empfehlung beendet, beispielsweise im Wesentlichen unverzüglich oder zum Beispiel nach 5 Minuten, 2 Minuten oder 1 Minute. Alternativ oder in Kombination hierzu wird beispielsweise das Projizieren der Empfehlung beendet, wenn eine Meldung empfangen wird, dass der Falschfahrer nicht mehr vorhanden ist.

Beispielsweise wird als Fahrparameter eine Geschwindigkeit herangezogen. Mit anderen Worten wird somit mittels des Projektors eine Empfehlung zur Anpassung der Geschwindigkeit verwendet. Hierbei wird beispielsweise eine bestimmte Geschwindigkeit angegeben, die somit zumindest teilweise eine Zahl umfasst. Mit anderen Worten erfolgt eine quantitative Angabe des Fahrparameters. In einer Alternative hierzu wird die (empfohlene) Geschwindigkeit qualitativ angegeben und somit beispielsweise projiziert, dass das Kraftfahrzeug schneller oder langsamer bewegt werden soll. Wenn der Fahrer der Empfehlung folgt, wird das Kraftfahrzeug mit einer vergleichsweise sicheren Geschwindigkeit bewegt. Somit ist sind die Folgen einer möglichen Kollision verringert oder die Kollision vollständig vermeidbar. Beispielsweise wird die Empfehlung der Anpassung der Geschwindigkeit so lange projiziert, wie der Vergleich positiv ist, also insbesondere die vollständige Zeit, die die Projektion erfolgt. Alternativ hierzu erfolgt die Projektion solange, bis die tatsächliche Geschwindigkeit des Kraftfahrzeugs mit der Geschwindigkeit übereinstimmt, die projiziert wird, also insbesondere sobald die tatsächliche Geschwindigkeit kleiner als ein bestimmter Schwellwert ist. Die vorgegebene/empfohlene/projizierte Geschwindigkeit ist zweckmäßigerweise der Schwellwert. Die empfohlene, also die projizierte, Geschwindigkeit ist beispielsweise konstant oder abhängig von der aktuellen tatsächlichen Geschwindigkeit und/oder weiteren Parametern, wie beispielsweise der Art des Streckenabschnitts, also insbesondere Straße, entlang derer das Kraftfahrzeug bewegt wird.

Alternativ oder besonders bevorzugt in Kombination hierzu wird als Fahrparameter eine Fahrspur herangezogen. Dies erfolgt insbesondere dann, wenn der Straßenabschnitt, entlang derer das Kraftfahrzeug bewegt wird, mehrere Fahrspuren aufweist, die vorgesehen sind, in die gleiche Fahrtrichtung befahren zu werden. Die Projektion erfolgt zum Beispiel lediglich dann, wenn sich das Kraftfahrzeug nicht bereits auf der Fahrspur befindet, die der Empfehlung entspricht. Mit anderen Worten wird das Projizieren der Empfehlung der Fahrspur beendet, wenn das Kraftfahrzeug die empfohlene Fahrspur erreicht hat. Alternativ hierzu wird auch in diesem Fall die Fahrspur mittels der Projektion ausgegeben, nämlich Fahrspur auf der das Kraftfahrzeug (aktuell) bewegt wird. Somit wird der Fahrer von einem Wechsel der Fahrspuren abgehalten. Die empfohlene Fahrspur ist insbesondere eine äußere Fahrspur des mehrspurigen Streckenabschnitts/Straßenabschnitt. Sofern ein Rechtsfahrgebot vorherrscht, entspricht die empfohlene Fahrspur insbesondere der äußersten rechten Fahrspur. Bei einem Linksfahrgebot hingegen ist die empfohlene Fahrspur zweckmäßigerweise die äußerste linke Fahrspur. Somit wird dann, wenn sich der Falschfahrer unabsichtlich entgegen der Fahrtrichtung bewegt, und sich ebenfalls an das jeweils vorherrschenden Fahrgebot hält, eine Kollision vermieden. Vorzugsweise wird die Empfehlung der Fahrspur mittels eines Pfeils und/oder mehrerer Pfeile ausgegeben, die auf die empfohlene Fahrspur weisen, also beispielsweise nach links oder rechts. Insbesondere wird hierbei ein abwechselndes Leuchten, also ein Blinken, der Pfeile verwendet, sodass der Fahrer hierauf aufmerksam wird.

Beispielsweise wird die Empfehlung stets erstellt und somit projiziert, wenn der Vergleich positiv ist. Besonders bevorzugt jedoch wird ein weiterer Verkehrsteilnehmer erfasst, und in Abhängigkeit hiervon wird die Empfehlung erstellt. Der weitere Verkehrsteilnehmer wird dabei beispielsweise mittels eines entsprechenden Sensors des Kraftfahrzeugs selbst erfasst. Der Sensor umfasst beispielsweise eine Kamera und/oder einen Radarsensor. In einer Alternative hierzu wird der weitere Verkehrsteilnehmer anhand von einer Mitteilung erfasst, die von dem weiteren Verkehrsteilnehmer oder von einer Infrastruktur zu dem Kraftfahrzeug gesandt wird. Zusammenfassend ist die Empfehlung auch auf den weiteren Verkehrsteilnehmer abgestimmt, was eine Sicherheit erhöht. So wird beispielsweise dann, wenn als Fahrparameter die Fahrspur herangezogen wird, das Erstellen der Empfehlung verhindert, diese also nicht erstellt, wenn sich der weitere Verkehrsteilnehmer auf der empfohlenen Fahrspur direkt neben dem Kraftfahrzeug oder direkt zwischen dem Kraftfahrzeug und der empfohlenen Fahrspur befindet. Bei einem Wechsel der Fahrspur würde somit das Kraftfahrzeug mit dem weiteren Verkehrsteilnehmer kollidieren. Da in diesem Fall die Empfehlung nicht ausgegeben wird, ist eine Sicherheit weiter erhöht.

Besonders bevorzugt wird als Fahrparameter ein Abstand zu dem weiteren Verkehrsteilnehmer herangezogen, wobei sich der weitere Verkehrsteilnehmer insbesondere in Fahrtrichtung vor dem Kraftfahrzeug befindet. Mit anderen Worten wird folglich empfohlen, den Abstand zu dem weiteren Verkehrsteilnehmer zu verändern und diesen beispielsweise auf einen bestimmten Wert einzustellen. Zum Beispiel wird der empfohlene Abstand quantitativ ausgegeben und umfasst somit eine bestimmte Zahl. Besonders bevorzugt jedoch wird der empfohlene Abstand qualitativ projiziert, also die Empfehlung, den Abstand zu vergrößern oder zu verringern. Hierfür wird insbesondere ein Pfeil herangezogen, der zu dem weiteren Verkehrsteilnehmer oder von diesem wegweist. Aufgrund der Empfehlung ist es somit für den Fahrer möglich, den Abstand zu dem weiteren Verkehrsteilnehmer auf einen Wert, nämlich den empfohlenen Abstand, einzustellen, bei dem die Wahrscheinlichkeit einer Kollision mit dem Falschfahrer verringert ist. Beispielsweise wird die den Abstand umfassende Empfehlung so lange projiziert, bis der Vergleich negativ ist, also die aktuelle Position des Kraftfahrzeugs mit der Position des Falschfahrers nicht mehr die bestimmte Bedingung erfüllt. Besonders bevorzugt jedoch wird die Projektion bereits beendet, wenn der Abstand im Wesentlichen dem empfohlenen Abstand entspricht, wobei beispielsweise eine Abweichung von 10 m, 5 m oder 2 m vorherrscht. Somit wird der Fahrer des Kraftfahrzeugs nicht übermäßig abgelenkt. Der empfohlene Abstand ist beispielsweise stets konstant oder besonders bevorzugt abhängig von einer aktuellen Situation, insbesondere der aktuellen Geschwindigkeit des Kraftfahrzeugs.

In einer weiteren Alternative wird die Empfehlung in Abhängigkeit eines Fahrmanövers erstellt. Insbesondere wird hierbei die den oder mehrere Fahrparameter umfassende Empfehlung lediglich dann projiziert, wenn das Fahrmanöver erfasst wurde, also insbesondere der Beginn eines Fahrmanövers. Beispielsweise wird direkt der Beginn des Fahrmanövers erfasst, oder hierfür vorbereitende Maßnahmen. Als Fahrmanöver wird insbesondere ein Überholmanöver herangezogen, und die Empfehlung wird beispielsweise dann projiziert, wenn ein Abstand des Kraftfahrzeugs zu einer seitlichen Begrenzung einer Fahrspur geringer als ein Grenzwert ist, oder diese überfahren wird. Mit anderen Worten beginnt in diesem Fall das Fahrmanöver. Bei dem Überholmanöver soll dabei ein sich in Fahrtrichtung vor dem Kraftfahrzeug befindender weiterer Verkehrsteilnehmer überholt werden, wofür die Fahrspur gewechselt werden muss. Alternativ hierzu erfolgt bereits das Projizieren der Empfehlung, wenn das Fahrmanöver, also das Überholmanöver, prognostiziert wird. Hierfür wird insbesondere die Betätigung eines Fahrtrichtungsanzeigers herangezogen. Mit anderen Worten wird dann, wenn erfasst wurde, dass das Überholmanöver durchgeführt wird oder der Fahrer im Begriff ist, das Überholmanöver durchzuführen, die Empfehlung ausgegeben. Als Empfehlung wird hierbei insbesondere ein Überholverbotszeichen projiziert. Alternativ oder in Kombination hierzu wird im Bereich einer bereits bestehenden Fahrbahnmarkierung, insbesondere einer seitlichen Begrenzung der Fahrspur, ein entsprechendes Symbol projiziert, vorzugsweise eine durchgezogene Linie, sodass der Fahrer von dem Überholvorgang abgehalten wird.

Eine Reaktion des Fahrers auf die Projektion der Empfehlung wird erfasst. Wenn die Reaktion des Fahrers nicht zu der Empfehlung korrespondiert, also der Fahrer der Empfehlung nicht folgt, und daher den Fahrparameter nicht entsprechend anpasst, wird eine Warnung ausgegeben. Somit wird der Fahrer darauf hingewiesen, der Empfehlung zu folgen. Die Warnung wird beispielsweise akustisch ausgegeben, vorzugsweise mittels eines in einem (Fahrgast- )Innenraum des Kraftfahrzeugs angeordneten Lautsprechers. Alternativ oder in Kombination hierzu wird die Warnung visuell ausgegeben, beispielsweise mittels des Projektors. Geeigneterweise wird hierfür die projizierte Empfehlung angepasst. In einer weiteren Alternative wird beispielsweise auf einem Display die Warnung ausgegeben, das im Fahrgastinnenraum angeordnet ist.

Besonders bevorzugt wird die Warnung haptisch ausgegeben. Hierfür wird beispielsweise ein Lenkrad des Kraftfahrzeugs vibriert. Insbesondere wird mittels des Lenkrads, insbesondere eines Lenksystems, das das Lenkrad aufweist, eine Gegenkraft auf eine von dem Fahrer durchgeführte Lenkbewegung ausgeübt. Dies erfolgt insbesondere dann, falls die Empfehlung in Abhängigkeit des Fahrmanövers erstellt wird, wobei als Fahrmanöver zweckmäßigerweise das Überholmanöver herangezogen wird. Mit anderen Worten wird dann, wenn der Fahrer des Kraftfahrzeugs trotz der gegenteiligen Empfehlung das Überholmanöver startet, ein Moment auf das Lenkrad gegeben, das der Lenkbewegung des Fahrers entgegenwirkt. Somit wird der Fahrer darauf hingewiesen, den Überholvorgang nicht zu starten. Insbesondere ist hierbei das Moment vergleichsweise gering, sodass der Fahrer dennoch den Überholvorgang starten kann, also das Moment kompensieren kann. Somit ist es beispielsweise bei Vorliegen einer weiteren Gefahrensituation, die mittels des Assistenzsystems nicht erfasst wurde, möglich, den Überholvorgang durchzuführen.

Das Assistenzsystem ist ein Bestandteil eines Kraftfahrzeugs und weist insbesondere eine Einheit zum Erfassen einer aktuellen Position des Kraftfahrzeugs oder zumindest eine Schnittstelle zur signaltechnischen Kopplung mit einer derartigen Einheit auf. Ferner umfasst das Assistenzsystem zweckmäßigerweise eine Einheit zum Erfassen einer Meldung betreffend einen Falschfahrer oder zumindest eine Schnittstelle für diese, wobei insbesondere die Schnittstelle auch zur signaltechnischen Kopplung mit der etwaigen Einheit zum Erfassen der aktuellen Position dient. Die Schnittstelle genügt hierbei insbesondere einem Bus Standard.

Das Assistenzsystem weist ferner einen Projektor auf, der beispielsweise ein LCD-Projektor ist. Der Projektor weist zweckmäßigerweise eine Leuchtquelle auf, mittels derer ein Lichtstrahl erstellt werden kann. Ferner weist der Projektor vorzugsweise eine Anzahl von Einheiten auf, mittels derer eine Manipulation des Lichtstrahls erfolgen kann, sodass mittels des Lichtstrahls ein Bild ausgegeben wird, und wobei mittels Manipulation des Lichtstrahls das Bild verändert werden kann. Das Bild wird hierbei ausgegeben, wenn der Lichtstrahl auf einen Gegenstand trifft. Der Projektor ist hierbei derart angeordnet, dass der Lichtstrahl auf einen vor dem Kraftfahrzeug liegenden Bereich trifft, der insbesondere mittels einer Straße gebildet ist. Beispielsweise wird hierbei der Projektor noch von weiteren Assistenzsystemen genutzt, was Herstellungskosten reduziert.

Das Assistenzsystem ist gemäß einem Verfahren betrieben, bei dem eine Meldung betreffend einen Falschfahrer empfangen wird, und bei dem eine mit der Meldung übertragene Position des Falschfahrers mit einer aktuellen Position verglichen wird. Für den Fahrer wird mittels des Projektors in den vor dem Kraftfahrzeug liegenden Bereich eine Empfehlung zur Anpassung eines Fahrparameters projiziert. Zweckmäßigerweise umfasst das Assistenzsystem eine Steuereinheit, die vorgesehen und eingerichtet ist, das Verfahren durchzuführen. Vorzugsweise wird der Projektor und/oder eine der etwaigen Einheiten zumindest teilweise mittels der Steuereinheit gesteuert und/oder betrieben.

Das Kraftfahrzeug weist vorzugsweise eine Anzahl an Rädern auf. Mittels der Räder erfolgt insbesondere ein Kontakt mit einer Umgebung, zweckmäßigerweise einem Boden, wie einer Fahrspur. Das Kraftfahrzeug ist landgebunden und vorzugsweise unabhängig von Schienen oder dergleichen bewegbar. Beispielsweise ist das Kraftfahrzeug ein Personenkraftwagen (Pkw) oder ein Nutzkraftwagen, wie ein Lastkraftwagen (Lkw) oder Bus. Insbesondere ist das Kraftfahrzeug geeignet, insbesondere vorgesehen und eingerichtet, autonom bewegt zu werden, insbesondere automatisiert, wobei vorzugsweise ein Automatisierungslevel bis zu Level 3 erreicht wird.

Das Kraftfahrzeug umfasst ein Assistenzsystem, das einen Projektor umfasst. Der Projektor ist hierbei geeignet, insbesondere vorgesehen und eingerichtet, in einen vor dem Kraftfahrzeug liegenden Bereich Informationen auszustrahlen/einzublenden. Hierfür wird mittels des Projektors insbesondere ein geeigneter Lichtstrahl erzeugt, mittels dessen der Bereich ausgeleuchtet wird. Der Projektor ist hierfür geeignet an weiteren Bestandteilen des Kraftfahrzeugs montiert.

Das Assistenzsystem ist gemäß einem Verfahren betrieben, bei dem eine Meldung betreffend einen Falschfahrer empfangen wird, und bei dem eine mit der Meldung übertragene Position des Falschfahrers mit einer aktuellen Position verglichen wird. Für den Fahrer wird mittels des Projektors in den vor dem Kraftfahrzeug liegenden Bereich eine Empfehlung zur Anpassung eines Fahrparameters projiziert. Zweckmäßigerweise weist das Assistenzsystem hierfür eine geeignete Steuereinheit auf.

Das Kraftfahrzeug weist zweckmäßigerweise ein Bussystem auf, beispielsweise ein CAN-Bussystem oder ein Flexray-Bussystem, mittels dessen das Assistenzsystem mit weiteren Komponenten des Kraftfahrzeugs signaltechnisch gekoppelt ist, insbesondere mit einem GPS-Empfänger zur Ermittlung der aktuellen Position, einem Funkempfänger zum Empfangen der Meldung, einem Navigationssystem und/oder einem Lenksystem. Zum Beispiel weist das Kraftfahrzeug das etwaige weitere Assistenzsystem auf.

Die im Zusammenhang mit dem Verfahren beschriebenen Vorteile und Weiterbildungen sind sinngemäß auch auf das Assistenzsystem /Kraftfahrzeug sowie untereinander zu übertragen und umgekehrt.

Nachfolgend wird ein Ausführungsbeispiel der Erfindung anhand einer Zeichnung näher erläutert. Darin zeigen:
- Fig. 1: schematisch vereinfacht ein Kraftfahrzeug mit einem Assistenzsystem,
- Fig. 2: ein Verfahren zum Betrieb des Assistenzsystems, und
- Fig. 3 - 5: jeweils das auf einer Fahrbahn bewegte Kraftfahrzeug bei Ausführung des Verfahrens in unterschiedlichen Situationen.

Einander entsprechende Teile sind in allen Figuren mit den gleichen Bezugszeichen versehen.

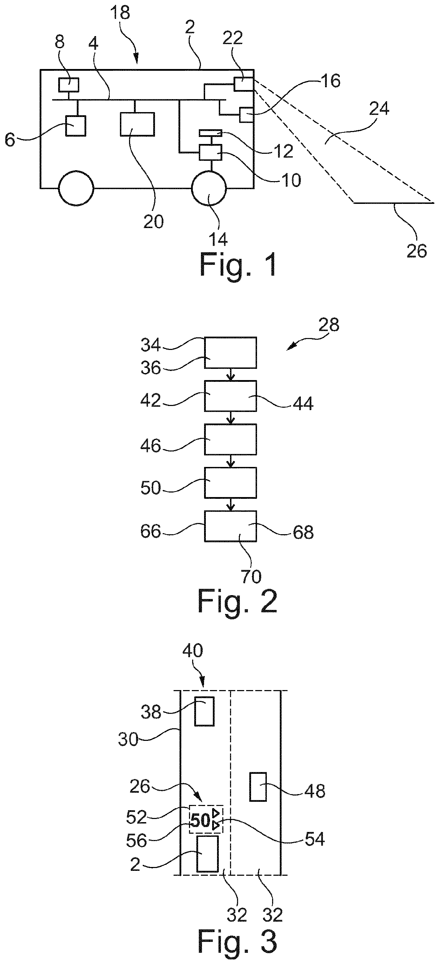

In Figur 1 ist schematisch vereinfacht ein Kraftfahrzeug 2 in Form eines Personenkraftwagens (Pkw) dargestellt. Das Kraftfahrzeug 2 weist ein Bussystem 4 in Form eines Flexray-Bussystems auf. Mit dem Bussystem 4 sind signaltechnisch eine Einheit zum Bestimmen einer aktuellen Position 6, nämlich ein GPS-Empfänger, sowie eine Einheit zum Empfangen von Meldungen 8 verbunden. Ferner ist mit dem Bussystem ein Lenksystem 10 signaltechnisch verbunden, mittels dessen eine Einstellung einer Fortbewegungsrichtung des Kraftfahrzeugs 2 erfolgt. Das Lenksystem 2 weist hierfür ein Lenkrad 12 auf, das vorgesehen und eingerichtet ist, von einem Nutzer des Kraftfahrzeugs 2, nämlich einem Fahrer, gegriffen zu werden. In Abhängigkeit einer Bedienung des Lenkrads 12 erfolgt hierbei eine Einstellung von Vorderrädern 14 des Kraftfahrzeugs 2.

Ferner ist mit dem Bussystem 4 ein Sensor 16 in Form eines Radarsensors verbunden. Mittels des Sensors 16 ist es hierbei möglich sich in einem vorderen sowie seitlichen Bereich um das Kraftfahrzeug 2 herum befindende weitere Verkehrsteilnehmer zu erfassen. Das Kraftfahrzeug weist zudem ein Assistenzsystem 18 auf, das eine Steuereinheit 20 sowie einen Projektor 22 umfasst, die jeweils ebenfalls an das Bussystem 4 angeschlossen und somit signaltechnisch miteinander verbunden sind. Mittels des Projektors 22 ist es möglich, bei Betrieb einen Lichtstrahl 24 zu erstellen und somit in einen vor dem Kraftfahrzeug liegenden Bereich 26, im Weiteren auch lediglich als Bereich bezeichnet, Bilder zu projizieren.

In Figur 2 ist ein Verfahren 28 zum Betrieb des Assistenzsystems 18 dargestellt. Das Verfahren 28 wird hierbei durchgeführt, wenn das Kraftfahrzeug 2 entlang eines in Figur 3 dargestellten Strecken- oder Straßenabschnitts einer Straße 30 bewegt wird, die zwei zueinander parallel verlaufende und aneinander angrenzende Fahrspuren 32 aufweist, die in die gleiche Fahrtrichtung befahren werden sollen. Der in Figur 3 dargestellte Straßenabschnitt, auch als Streckenabschnitt bezeichnet, der Straße 30 stellt somit beispielsweise eine Autobahn oder dergleichen dar.

In einem ersten Arbeitsschritt 34 wird von dem Assistenzsystem 18 eine Meldung 36 betreffend einen Falschfahrer 38 empfangen. In diesem Beispiel bewegt sich der Falschfahrer 38 auf der gleichen Fahrspur 32 wie das Kraftfahrzeug 2 und befinden sich bezüglich der Fahrtrichtung des Kraftfahrzeugs 2 vor diesem. Die Meldung 36 wird von einer behördlichen Stelle oder einem Radiosender ausgestrahlt und mittels der Einheit 8 zum empfangen von Meldungen 36 empfangen. Von dieser wird die Meldung 36 in das Bussystem 4 eingespeist und nachfolgend von der Steuereinheit 20 empfangen. Somit wird von dem Assistenzsystem 18 die Meldung 36 über das Bussystem 4 empfangen. In der Meldung 36 ist hierbei auch eine Position 40 des Falschfahrers 38 enthalten. In diesem Beispiel entspricht die Position 40 des Falschfahrers 38 dem in Figur 3 dargestellten Streckenabschnitt, also mehreren einzelnen Punkten entlang der Straße 30, nämlich einer Strecke, die sich zwischen zwei bestimmten Punkten der Straße 30 befindet, wie beispielsweise Anschlussstellen oder Abfahrten.

In seinem sich anschließenden zweiten Arbeitsschritt 42 wird von der Steuereinheit 20 über das Bussystem 4 bei der Einheit 6 zur Bestimmung der aktuellen Position eine aktuelle Position 44 des Kraftfahrzeugs 2 abgefragt. Die aktuelle Position 44 des Kraftfahrzeugs 2 wird mit der Position 40 des Falschfahrers 38 verglichen. Hierfür wird mittels in der Steuereinheit 20 oder in einem nicht näher dargestellten Navigationssystem hinterlegten Navigationsdaten der aktuellen Position 44 des Kraftfahrzeugs 2 ein Streckenabschnitt, nämlich der in Figur 3 dargestellte, zugeordnet. Diesem ist ebenfalls die Position 40 des Falschfahrers 38 zugeordnet. Ferner wird bei dem Vergleich überprüft, ob sich der Falschfahrer 38 in Fahrtrichtung des Kraftfahrzeugs 2 vor diesem befindet, also ob eine Kollision oder zumindest ein Begegnen des Falschfahrers 38 mit dem Kraftfahrzeug 2 innerhalb einer nachfolgenden Zeitspanne von 10 Minuten oder 5 Minuten erfolgen würde. Bei dem in Figur 3 dargestellten Beispiel ist dies der Fall.

Daher wird nachfolgend ein dritter Arbeitsschritt 46 durchgeführt. In diesem wird mittels des Sensors 16 ein weiterer Verkehrsteilnehmer 48 erfasst. In dem dargestellten Beispiel befindet sich der weitere Verkehrsteilnehmer 48 in Fahrtrichtung des Kraftfahrzeugs 2 vor diesem und auf der zu diesem benachbarten Fahrspur 32. In einem sich anschließenden vierten Arbeitsschritt 50 wird in Abhängigkeit des Vergleichs der Position 40 des Falschfahrers 38 mit der aktuellen Position 44 des Kraftfahrzeugs 2 sowie in Abhängigkeit des weiteren Verkehrsteilnehmers 48 eine Empfehlung 52 zur Anpassung eines Fahrparameters erstellt und mittels des Projektors 22 in den vor dem Kraftfahrzeug 2 liegenden Bereich 26 projiziert, wofür ein entsprechender Lichtstrahl 24 erstellt wird. Bei dem dargestellten Beispiel wird als Fahrparameter eine Fahrspur 54 herangezogen. Mit anderen Worten umfasst die Empfehlung 52 die empfohlene Fahrspur 54. Diese wird mittels zu der jeweiligen Fahrspur 32 weisenden Pfeilen dargestellt. In dem gezeigten Beispiel herrscht ein Rechtsfahrgebot, und das Kraftfahrzeug 2 wird nicht auf der äußersten rechten Fahrspur 32 bewegt. Daher weisen die Pfeile nach rechts, und die empfohlene Fahrspur 54 entspricht der äußersten rechten Fahrspur 32.

Ferner weist die Empfehlung 52 eine empfohlene Geschwindigkeit 56 auf. Bei einem Wechsel der Fahrspur 32 durch das Kraftfahrzeug 2 ohne Anpassung von dessen Geschwindigkeit würde das Kraftfahrzeug 2 einen zu geringen Abstand zu dem weiteren Verkehrsteilnehmer 48 aufweisen. Daher ist eine Anpassung der Geschwindigkeit des Kraftfahrzeugs 2 erforderlich. Auch ist auf diese Weise eine Kollision mit dem die Fahrspur 32 wechselnden Kraftfahrzeug 2 ausgeschlossen. Zudem wäre, wenn die Geschwindigkeit des Kraftfahrzeug 2 auf die empfohlene Geschwindigkeit 56 angepasst würde, bei einer Kollision des Kraftfahrzeugs 2 mit dem Falschfahrer 38 die Folgen abgeschwächt.

Wenn das Kraftfahrzeug 2 mit der empfohlenen Geschwindigkeit 56 sowie auf der empfohlenen Fahrspur 54 bewegt wird, wird mittels des Projektors 22 die Empfehlung 52 nicht weiter ausgegeben, sodass der Fahrer des Kraftfahrzeugs 2 nicht abgelenkt wird. Auch wird das Verfahren 28 solange wiederholt, bis in dem zweiten Arbeitsschritt 42 der Vergleich negativ ist. Daher wird die Ausgabe der Empfehlung 52 ebenfalls beendet, wenn der Falschfahrer 38 das Kraftfahrzeug 2 passiert hat und folglich der in dem zweiten Arbeitsschritt durchgeführte Vergleich negativ ist. Auch wird das Verfahren 28 beendet, wenn eine bestimmte Zeitspanne seit Empfangen der Meldung 36 vergangen ist, oder falls diese für einen bestimmten Zeitraum nicht weiter gesendet wurde.

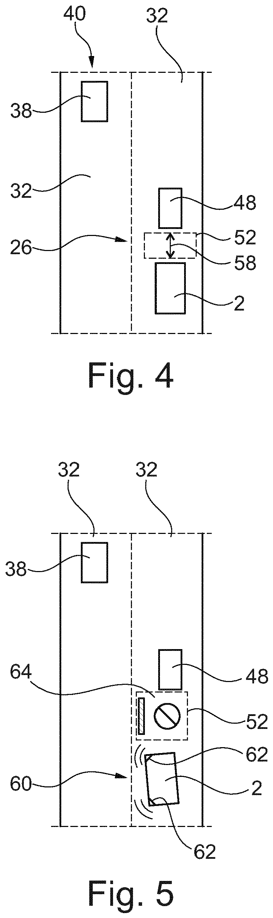

In Figur 4 ist eine abweichende Fahrsituation dargestellt, bei der ebenfalls das Verfahren 28 durchgeführt wird. Die Straße 30 sowie der Falschfahrer 38 sind nicht verändert. Auch ist wiederrum der weitere Verkehrsteilnehmer 48 vorhanden. Das Kraftfahrzeug 2 wird jedoch in Fahrtrichtung des weiteren Verkehrsteilnehmers 48 hinter diesem auf der gleichen Fahrspur 32 bewegt. Es werden der erste bis zu dem vierten Arbeitsschritt 34, 42, 46, 50 durchgeführt. Somit wird auch hier wird die Empfehlung 52 auf den vor dem Kraftfahrzeug 2 liegenden Bereich 26 projiziert. In diesem Beispiel wird als Fahrparameter ein empfohlener Abstand 58 zu dem weiteren Verkehrsteilnehmer 48 herangezogen. Der empfohlene Abstand 58 wird dabei mittels eines Doppelpfeils symbolisiert. Mit anderen Worten wird der empfohlene Abstand 58 quantitativ dargestellt. Mittels des Doppelpfeils wird der Fahrer des Kraftfahrzeugs 2 darauf hingewiesen, dass dieser den Abstand zu dem weiteren Verkehrsteilnehmer 48 vergrößern soll, sodass für beide ausreichend Platz zur Durchführung unterschiedlicher Fahrmanöver vorhanden ist.

Die Projektion der Empfehlung 52 erfolgt dabei lediglich dann, wenn der Bereich 26 frei von dem weiteren Verkehrsteilnehmer 48 ist. Damit dies der Fall ist, ist der Bereich 26 und somit auch die Empfehlung 52 verkleinert, sodass diese von dem Fahrer des Kraftfahrzeugs 2 wahrgenommen werden kann. Falls das Kraftfahrzeug 2 den empfohlenen Abstand zu dem weiteren Verkehrsteilnehmer 48 oder einen größeren Abstand aufweist, wird wiederum die Empfehlung 52 nicht weiter ausgegeben. Auch wird das Verfahren 28 so lange wiederholt, bis der in dem zweiten Arbeitsschritt 42 durchgeführt Vergleich negativ ist, oder die Meldung 36 nicht weiter empfangen wird.

In Figur 5 ist eine weitere Fahrsituation dargestellt, bei dem das Verfahren 28 ebenfalls durchgeführt wird. Auch hier wird der erste und zweite Arbeitsschritt 34, 42 unverändert durchgeführt. Ebenfalls wird in dem dritten Arbeitsschritt 46 der weitere Verkehrsteilnehmer 48 erfasst. Dieser befindet sich wiederum in Fahrtrichtung des Kraftfahrzeugs 2 vor diesem. Da die Geschwindigkeit des Kraftfahrzeugs 2 der empfohlenen Geschwindigkeit 46 entspricht, und da sich das Kraftfahrzeug 2 auf der empfohlenen Fahrspur 54 bewegt, und da der Abstand des Kraftfahrzeugs 2 zu dem weiteren Verkehrsteilnehmer 48 dem empfohlenen Abstand 58 entspricht oder größer ist, wird zunächst keine Empfehlung 52 ausgegeben. Jedoch wird von dem Fahrer des Kraftfahrzeugs 2 beabsichtigt, ein Fahrmanöver 60, nämlich ein Überholmanöver, durchzuführen. Hierfür wird das Kraftfahrzeug 2 in Richtung der benachbarten Fahrspur 32 gelenkt und ein entsprechender Fahrtrichtungsanzeiger 62 aktiviert. In Abhängigkeit dieses Fahrmanövers 60 wird die Empfehlung 52 erstellt und mittels des Projektors 22 ausgegeben. Die Empfehlung 52 weist hierbei eine Überholwarnung 64, die ein entsprechendes Verkehrszeichen umfasst. Auch wird im Bereich einer Fahrbahnmarkierung zwischen den beiden Fahrspuren 32 eine Linie der Überholwarnung 64 projiziert, die den Fahrer des Kraftfahrzeugs 2 vom Durchführen des Fahrmanövers 60, nämlich des Überholmanövers, abhalten soll.

Zusätzlich wird ein fünfter Arbeitsschritt 66 durchgeführt, bei dem eine Reaktion 68 des Fahrers des Kraftfahrzeugs 2 erfasst wird. Wenn die Reaktion 68 nicht zu der Empfehlung 52 korrespondiert, wird eine Warnung 70 ausgegeben. Mit anderen Worten wird die Warnung 70 ausgegeben, wenn der Fahrer das Kraftfahrzeug 2 das Fahrmanöver 60, also das Überholmanöver, dennoch durchführt und hierfür die Fahrspur 32 wechselt. Als Warnung 70 wird das Lenkrad 12 vibriert. Mit anderen Worten erfolgt eine haptische Warnung des Fahrers des Kraftfahrzeugs 2. Hierfür wird ein entsprechender Ansteuerbefehl an das Lenksystem 10 übermittelt. Alternativ oder in Kombination hierzu wird mittels des Lenksystems 10 auf das Lenkrad 12 ein Moment aufgebracht, das der Bedienung des Fahrers entgegen gerichtet ist. Somit ist es für den Fahrer des Kraftfahrzeugs 2 erforderlich, ein erhöhtes Moment aufzubringen, damit das Kraftfahrzeug 2 auf die benachbarte Fahrspur 32 gesteuert wird, und somit das Überholmanöver durchgeführt werden kann.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebene Einzelmerkmale auch auf andere Weise miteinander kombinierbar, ohne den Gegenstand der Erfindung zu verlassen.

### BEZUGSZEICHENLISTE:

- 2: Kraftfahrzeug
- 4: Bussystem
- 6: Einheit zum Bestimmen einer aktuellen Position
- 8: Einheit zum Empfangen von Meldungen
- 10: Lenksystem
- 12: Lenkrad
- 14: Vorderrad
- 16: Sensor
- 18: Assistenzsystem
- 20: Steuereinheit
- 22: Projektor
- 24: Lichtstrahl
- 26: vor dem Kraftfahrzeug liegender Bereich
- 28: Verfahren
- 30: Straße
- 32: Fahrspur
- 34: erster Arbeitsschritt
- 36: Meldung
- 38: Falschfahrer
- 40: Position des Falschfahrers
- 42: zweiter Arbeitsschritt
- 44: aktuelle Position
- 46: dritter Arbeitsschritt
- 48: weiterer Verkehrsteilnehmer
- 50: vierter Arbeitsschritt
- 52: Empfehlung
- 54: empfohlene Fahrspur
- 56: empfohlene Geschwindigkeit
- 58: empfohlener Abstand
- 60: Fahrmanöver
- 62: Fahrtrichtungsanzeiger
- 64: Überholwarnung
- 66: fünfter Arbeitsschritt
- 68: Reaktion
- 70: Warnung

## Patentansprüche

1. Verfahren (28) zum Betrieb eines einen Projektor (22) aufweisenden Assistenzsystems (18) eines Kraftfahrzeugs (2), bei welchem
- eine Meldung (36) betreffend einen Falschfahrer (38) empfangen wird,
- eine mit der Meldung (36) übertragene Position (40) des Falschfahrers (38) mit einer aktuellen Position (44) verglichen wird,
- in Abhängigkeit des Vergleichs für den Fahrer mittels des Projektors (22) in einen vor dem Kraftfahrzeug (2) liegenden Bereich (26) eine Empfehlung (52) zur Anpassung eines Fahrparameters (54, 56, 58, 64) projiziert wird,
- eine Reaktion (68) eines Fahrers erfasst wird, und
- eine Warnung (70) ausgegeben wird, wenn die Reaktion (68) nicht zur Empfehlung (52) korrespondiert.

2. Verfahren (28) nach Anspruch 1, **dadurch gekennzeichnet, dass** als Fahrparameter eine Geschwindigkeit (56) herangezogen wird.

3. Verfahren (28) nach Anspruch 1 oder 2, **dadurch gekennzeichnet, dass** als Fahrparameter eine Fahrspur (54) herangezogen wird.

4. Verfahren (28) nach einem der Ansprüche 1 bis 3, **dadurch gekennzeichnet, dass** ein weiterer Verkehrsteilnehmer (48) erfasst und in Abhängigkeit hiervon die Empfehlung (52) erstellt wird.

5. Verfahren (28) nach Anspruch 4, **dadurch gekennzeichnet, dass** als Fahrparameter ein Abstand (58) zu dem weiteren Verkehrsteilnehmer (48) herangezogen wird.

6. Verfahren (28) nach einem der Ansprüche 1 bis 5, **dadurch gekennzeichnet, dass** die Empfehlung (52) in Abhängigkeit eines Fahrmanövers (60) erstellt wird.

7. Assistenzsystem (18) eines Kraftfahrzeugs (2), welches einen Projektor (22) aufweist, und welches eine Einheit (6) zum Erfassen einer aktuellen Position des Kraftfahrzeugs (2) oder zumindest eine Schnittstelle zur signaltechnischen Kopplung mit einer derartigen Einheit aufweist, und welches eine Einheit (8) zum Erfassen einer Meldung betreffend einen Falschfahrer oder zumindest eine Schnittstelle für diese aufweist, und welches eine Steuereinheit (20) aufweist, die vorgesehen und eingerichtet ist, das Verfahren (28) nach einem der Ansprüche 1 bis 6 durchzuführen.

8. Kraftfahrzeug (2) mit einem Assistenzsystem (18) nach Anspruch 7.

## Claims

1. Method (28) for operating an assistance system (18), having a projector (22), of a motor vehicle (2), in which method
- a notification (36) in relation to a wrong-way driver (38) is received,
- a position (40) of the wrong-way driver (38), as transmitted with the notification (36), is compared with a current position (44),
- on the basis of the comparison, a recommendation (52) to adapt a driving parameter (54, 56, 58, 64) is projected into a region (26) located in front of the motor vehicle (2) for the driver by way of the projector (22),
- a response (68) of a driver is detected, and
- a warning (70) is output when the response (68) does not correspond to the recommendation (52).

2. Method (28) according to Claim 1, **characterized in that** a speed (56) is used as driving parameter.

3. Method (28) according to Claim 1 or 2, **characterized in that** a lane (54) is used as driving parameter.

4. Method (28) according to one of Claims 1 to 3, **characterized in that** a further road user (48) is detected and the recommendation (52) is created on the basis thereof.

5. Method (28) according to Claim 4, **characterized in that** a distance (58) from the further road user (48) is used as driving parameter.

6. Method (28) according to one of Claims 1 to 5, **characterized in that** the recommendation (52) is created on the basis of a driving manoeuvre (60).

7. Assistance system (18) of a motor vehicle (2), having a projector (22), and having a unit (6) for detecting a current position of the motor vehicle (2) or at least one interface to be coupled in terms of signalling to such a unit, and having a unit (8) for acquiring a notification in relation to a wrong-way driver or at least one interface for this purpose, and having a control unit (20) that is intended and configured to perform the method (28) according to one of Claims 1 to 6.

8. Motor vehicle (2) having an assistance system (18) according to Claim 7.

## Revendications

1. Procédé (28) pour faire fonctionner un système d'assistance (18) d'un véhicule automobile (2) présentant un projecteur (22), dans lequel
- un message (36) concernant un conducteur à contresens (38) est reçu,
- une position (40) du conducteur à contresens (38), transmise avec le message (36), est comparée à une position actuelle (44),
- en fonction de la comparaison, une recommandation (52) pour le conducteur est projetée au moyen du projecteur (22) dans une zone (26) située devant le véhicule automobile (2) pour l'adaptation d'un paramètre de conduite (54, 56, 58, 64),
- une réaction (68) d'un conducteur est détectée, et
- un avertissement (70) est délivré si la réaction (68) ne correspond pas à la recommandation (52).

2. Procédé (28) selon la revendication 1, **caractérisé en ce qu'**une vitesse (56) est utilisée en tant que paramètre de conduite.

3. Procédé (28) selon la revendication 1 ou 2, **caractérisé en ce qu'**une voie de circulation (54) est utilisée en tant que paramètre de conduite.

4. Procédé (28) selon l'une quelconque des revendications 1 à 3, **caractérisé en ce qu'**un autre usager de la route (48) est détecté et **en ce que** la recommandation (52) est établie en fonction de cela.

5. Procédé (28) selon la revendication 4, **caractérisé en ce qu'**une distance (58) par rapport à l'autre usager de la route (48) est utilisée en tant que paramètre de conduite.

6. Procédé (28) selon l'une quelconque des revendications 1 à 5, **caractérisé en ce que** la recommandation (52) est établie en fonction d'une manoeuvre de conduite (60).

7. Système d'assistance (18) d'un véhicule automobile (2), présentant un projecteur (22), et présentant une unité (6) permettant de détecter une position actuelle du véhicule automobile (2) ou au moins une interface permettant un couplage par signaux à une telle unité, et qui présente une unité (8) permettant de détecter un message concernant un conducteur à contresens ou au moins une interface destinée à cela, et présentant une unité de commande (20) qui est prévue et conçue pour mettre en œuvre le procédé (28) selon l'une quelconque des revendications 1 à 6.

8. Véhicule automobile (2) comportant un système d'assistance (18) selon la revendication 7.
